# EUROPEAN PATENT APPLICATION

(11) **EP 2 424 012 A2**
(43) Date of publication of application: **29.02.2012**
(21) Application number: 11171900.1
(22) Date of filing: 29.06.2011
(51) Int. Cl.: H01M 4/52, H01M 4/04, H01M 10/0525, H01M 4/525, H01M 4/62

(54) **Electrode for nonaqueous electrolyte secondary battery and nonaqueous electrolyte secondary battery**

(30) Priority: 26.08.2010 JP 2010189770
(71) Applicant: Sanyo Electric Co., Ltd., Osaka 570-8677 (JP)
(72) Inventor: Suzuki, Akihiro, Kobe, Hyogo 651-2242 (JP); Niina, Fumiharu, Kobe, Hyogo 651-2242 (JP); Yoshida, Toshikazu, Kobe, Hyogo 651-2242 (JP); Kida, Yoshinori, Kobe, Hyogo 651-2242 (JP); Fujitani, Shin, Kobe, Hyogo 651-2242 (JP)
(74) Representative: ter Meer, Nicolaus

(57) **Abstract**

An electrode for a nonaqueous electrolyte secondary battery that can sufficiently improve the power output characteristic of the nonaqueous electrolyte secondary battery. The electrode for the nonaqueous electrolyte secondary battery includes a current collector and an active material layer formed on the current collector and containing an active material. The active material contains first and second particulate lithium-containing transition metal oxides of different voidages.

## Description

### BACKGROUND OF THE INVENTION

### TITLE OF THE INVENTION

### ELECTRODE FOR NONAQUEOUS ELECTROLYTE SECONDARY BATTERY AND NONAQUEOUS ELECTROLYTE SECONDARY BATTERY

### BACKGROUND OF THE INVENTION

### FIELD OF THE INVENTION

This invention relates to electrodes for nonaqueous electrolyte secondary batteries and nonaqueous electrolyte secondary batteries including the same.

### DESCRIPTION OF RELATED ARTS

In recent years, lithium secondary batteries capable of achieving size and weight reduction and high capacity have been widely used as power sources for mobile phones and the like. Lithium secondary batteries have more recently been given increasing attention also as batteries for applications requiring high power output, such as electric tools and electric cars. Therefore, increasing the power output of lithium secondary batteries is a significant challenge at the present time.

For example, JP-A-2009-32647 discloses, as a method for increasing the power output of a lithium secondary battery, the use of a mixture of two kinds of powdered lithium-containing transition metal oxides of different compositions as a positive-electrode active material. JP-A-2010-80394 describes that a positive-electrode active material for use in a lithium secondary battery is composed of secondary particles of a lithium-nickel-based composite oxide and the percentage of the area of voids within the cross section of the secondary particle relative to the total area of the cross section of the secondary particle is 2.5% to 9%, whereby both of a high charge/discharge capacity and an excellent charge-discharge cycle life characteristic can be satisfied.

### SUMMARY OF THE INVENTION

However, even if either technique described in JP-A-2009-32647 and JP-A-2010-80394 is applied, the power output characteristic of the nonaqueous electrolyte secondary battery cannot sufficiently be improved.

The present invention has been made in view of the above problem and, therefore, an object thereof is to provide an electrode for a nonaqueous electrolyte secondary battery that can sufficiently improve the power output characteristic of the nonaqueous electrolyte secondary battery.

An electrode for a nonaqueous electrolyte secondary battery according to the present invention includes a current collector and an active material layer formed on the current collector and containing an active material. The active material contains first and second particulate lithium-containing transition metal oxides of different voidages. Therefore, the use of the electrode for the nonaqueous electrolyte secondary battery according to the present invention improves the power output characteristic of the resulting nonaqueous electrolyte secondary battery. Although the reasons for this improvement are not completely clear, one reason can be assumed to be that the particulate lithium-containing transition metal oxide having a higher voidage is slightly deformed to reduce the interparticle space between particles of the first and second lithium-containing transition metal oxides, whereby the packing density of the active material layer can be increased. In addition, another reason can be assumed to be that the use of such a particulate lithium-containing transition metal oxide having a high voidage improves the electrolytic solution retention in the active material layer.

From the viewpoint of implementing more improved power output characteristic, it is preferred that the difference in voidage between the first and second particulate lithium-containing transition metal oxides be large. Specifically, the voidage of the first particulate lithium-containing transition metal oxide is preferably at least 20% smaller, more preferably at least 30% smaller than that of the second particulate lithium-containing transition metal oxide. However, if the voidage difference between the first and second particulate lithium-containing transition metal oxides is too large, the voidage of the first particulate lithium-containing transition metal oxide is small, which may provide poor electrolytic solution retention and may in turn degrade the power output characteristic. Furthermore, the voidage of the second particulate lithium-containing transition metal oxide is large, so that the strength of the resulting positive-electrode active material layer is decreased. This may cause the positive-electrode active material layer to be deformed by kneading stress and rolling stress created during production of a positive electrode, may thereby lower the electrical conductivity, and may also degrade the power output characteristic. Therefore, the voidage of the first particulate lithium-containing transition metal oxide is preferably 5% or more of that of the second particulate lithium-containing transition metal oxide.

More specifically, the voidage of the first particulate lithium-containing transition metal oxide is preferably 10% or less. Still more specifically, the voidage of the first particulate lithium-containing transition metal oxide is preferably 0% to 10% and more preferably 1% to 5%. The voidage of the second particulate lithium-containing transition metal oxide is preferably not less than 30% and more preferably not less than 35%. However, if the voidage of the second particulate lithium-containing transition metal oxide is too large, the strength of the resulting positive-electrode active material layer is decreased, which may cause the positive-electrode active material layer to be deformed by kneading stress and rolling stress created during production of a positive electrode, may thereby lower the electrical conductivity, and may also degrade the power output characteristic. Therefore, the voidage of the second particulate lithium-containing transition metal oxide is preferably not more than 80%, more preferably not more than 70%, and still more preferably not more than 50%.

The term "voidage of a particulate lithium-containing transition metal oxide" in the present invention refers to the percentage of the area of voids within the cross section of the secondary particle of the particulate lithium-containing transition metal oxide relative to the total area of the cross section of the secondary particle. The cross section of the secondary particle can be exposed by processing the secondary particle with a cross section polisher. Furthermore, the portions of the cross section occupied by voids can be determined by using image processing software "Image-Pro Plus" ver.4 to adjust the gray levels, brightness, and contrast of a SEM image representing the cross section of the secondary particle and calculate the area of the dark portions of the image.

The method for controlling the voidage of the particulate lithium-containing transition metal composite oxide is not particularly limited. For example, the voidage can be controlled by the firing temperature for the particulate lithium-containing transition metal composite oxide. Specifically, if the firing temperature is increased, the voidage can be reduced. On the contrary, if the firing temperature is decreased, the voidage can be increased. Furthermore, if the firing is made with the addition of a gas-evolving agent, the voidage can be controlled by the amount of gas-evolving agent added.

The voidage can also be controlled by the method for producing a particulate lithium-containing transition metal composite oxide. For example, the voidage is likely to become relatively high with the use of spray drying, while the voidage is likely to become relatively low with the use of coprecipitation. Therefore, it is also possible to produce a first particulate lithium-containing transition metal oxide having a low voidage using coprecipitation and produce a second particulate lithium-containing transition metal oxide having a high voidage using spray drying.

The content of the first particulate lithium-containing transition metal oxide in the total amount of the first and second particulate lithium-containing transition metal oxides (the first particulate lithium-containing transition metal oxide to first particulate lithium-containing transition metal oxide plus second particulate lithium-containing transition metal oxide ratio) is preferably 50% by mass or more. In this case, the power output characteristic of the resulting lithium secondary battery can be further improved.

However, if the first particulate lithium-containing transition metal oxide to first particulate lithium-containing transition metal oxide plus second particulate lithium-containing transition metal oxide ratio is too large, the power output characteristic of the resulting lithium secondary battery may be degraded rather than improved. Therefore, the first particulate lithium-containing transition metal oxide to first particulate lithium-containing transition metal oxide plus second particulate lithium-containing transition metal oxide ratio is preferably not more than 75% by mass.

Each of the first and second particulate lithium-containing transition metal oxides may be made of any lithium-containing transition metal oxide, but preferably it has a layered structure and is made of a lithium-containing transition metal oxide containing at least one of nickel, cobalt, and manganese. More preferably, each of the first and second particulate lithium-containing transition metal oxides has a layered structure and is made of a lithium-containing transition metal oxide containing all of nickel, cobalt, and manganese.

A specific example of the lithium-transition metal composite oxide having a layered structure and containing at least one of nickel, cobalt, and manganese is LiCoO₂. Specific examples of the lithium-containing transition metal oxide having a layered structure and containing all of nickel, cobalt, and manganese include LiNi_{0.3}Co_{0.3}Mn_{0.3}O₂ and LiNi_{0.4}Co_{0.2}Mn_{0.4}O₂.

The first and second particulate lithium-containing transition metal oxides may be of different kinds of lithium-containing transition metal oxides but are preferably of the same kind of lithium-containing transition metal oxide. The latter case has an advantage in that a heterogeneous reaction is less likely to occur.

The active material layer may further contain a particulate lithium-containing transition metal composite oxide other than the first and second particulate lithium-containing transition metal oxides. The active material layer may further contain a binder and/or an electronic conductor. A specific example of the binder is polyvinylidene fluoride. Specific examples of the electronic conductor include acetylene black and vapour grown carbon fibers (VGCF).

The thickness of the active material layer is not particularly limited and may be about 10 µm to about 200 µm, for example.

In the present invention, the current collector is not particularly limited so long as it has electrical conductivity. The current collector can be formed of a piece of foil made of an electrically conductive metal or alloy. Specifically, if the electrode is a negative electrode, the current collector can be formed of a piece of foil made of Cu or like metal or made of an alloy containing Cu or like metal. On the other hand, if the electrode is a positive electrode, the current collector can be formed of a piece of foil made of Al or like metal or made of an alloy containing Al or like metal. The current collector can have a thickness of about 5 µm to about 30 µm, for example.

The electrode for the nonaqueous electrolyte secondary battery of the present invention may be a negative electrode but is preferably a positive electrode.

A nonaqueous electrolyte secondary battery according to the present invention includes the electrode for the nonaqueous electrolyte secondary battery according to the present invention. Therefore, the nonaqueous electrolyte secondary battery according to the present invention has an excellent power output characteristic.

The nonaqueous electrolyte secondary battery according to the present invention includes a positive electrode, a negative electrode, a separator disposed between the positive and negative electrodes, and a nonaqueous electrolytic solution, and at least one of the positive and negative electrodes may be composed of the electrode for the nonaqueous electrolyte secondary battery according to the present invention. Particularly, the positive electrode is preferably composed of the electrode for the nonaqueous electrolyte secondary battery according to the present invention.

In this case, the negative-electrode active material for use in the negative electrode may be made of any material so long as it can reversibly store and release lithium ions. Specific preferred examples of negative-electrode active materials that can be used include carbon materials, metallic or alloy materials capable of forming an alloy with lithium, and metal oxides. Particularly preferred among these negative-electrode active materials are carbon materials. Specific examples of carbon materials include natural graphite, artificial graphite, mesophase pitch-based carbon fibers (MCF), mesocarbon microbeads (MCMB), cokes, hard carbons, fullerenes, carbon nanotube, and carbon materials in which a graphite material is coated with a low-crystallinity carbon.

Specific examples of nonaqueous solvents that can be used in the nonaqueous electrolytic solution include cyclic carbonates, such as ethylene carbonate, propylene carbonate, butylene carbonate, and vinylene carbonate; chain carbonates, such as dimethyl carbonate, methyl ethyl carbonate, and diethyl carbonate; and mixture solvents of one or more of the cyclic carbonates and one or more of the chain carbonates. In such a mixture solvent of a cyclic carbonate and a chain carbonate the volume ratio of the cyclic carbonate to the chain carbonate (the cyclic carbonate to chain carbonate ratio) is preferably within the range of 2:8 to 5:5.

Ionic liquids can also preferably be used as a nonaqueous solvent. Preferred examples of cations that can be used in the ionic liquid include pyridinium cations, imidazolium cations, and quaternary ammonium cations. Preferred examples of anions that can be used in the ionic liquid include fluorine-containing imide-based anions.

Specific examples of solutes that can be used in the nonaqueous electrolytic solution include lithium salts containing one or more elements selected from the group consisting of P, B, F, O, S, N, and Cl. Specific examples of the lithium salts include LiPF₆, LiBF₄, LiCF₃SO₃, LiN(CF₃SO₂)₂, LiN(C₂F₅SO₂)₂, LiN(CF₃SO₂) (C₄F₉SO₂), LiC(C₂F₅SO₂)₃, LiAsF₆, and LiClO₄. The particularly preferred solute to be used is LiPF₆ in view of obtaining excellent charge/discharge characteristics and durability.

The separator interposed between the positive and negative electrodes can be composed, for example, of a separator made of polypropylene or polyethylene, or a polypropylene/polyethylene multilayer separator.

In accordance with the present invention, an electrode for a nonaqueous electrolyte secondary battery can be provided which can sufficiently improve the power output characteristic of the nonaqueous electrolyte secondary battery.

### BRIEF DESCRIPTION OF THE DRAWINGS

Fig. 1 is a schematic illustration of a three-electrode test cell produced in Examples and Comparative Examples.
Fig. 2 is a scanning electron micrograph of a cross section of a first particulate lithium-containing transition metal oxide produced in Example 1.
Fig. 3 is a scanning electron micrograph of a cross section of a second particulate lithium-containing transition metal oxide produced in Example 1.

### DETAILED DESCRIPTION

Hereinafter, the present invention will be described in more detail with reference to specific examples. However, the present invention is not limited at all by the following examples and can be embodied in various other forms appropriately modified without changing the spirit of the invention.

### Example 1

(Production of First Particulate Lithium-Containing Transition Metal Oxide)

In this example, a first particulate lithium-containing transition metal oxide was produced by coprecipitation. Specifically, an aqueous solution was prepared which contained nickel ions, cobalt ions, and manganese ions prepared from nickel sulphate, cobalt sulphate, and manganese sulphate, respectively. Note that the aqueous solution was formulated so that the molar ratio among cobalt, nickel, and manganese in the aqueous solution (the cobalt to nickel to manganese ratio) was 40:20:40.

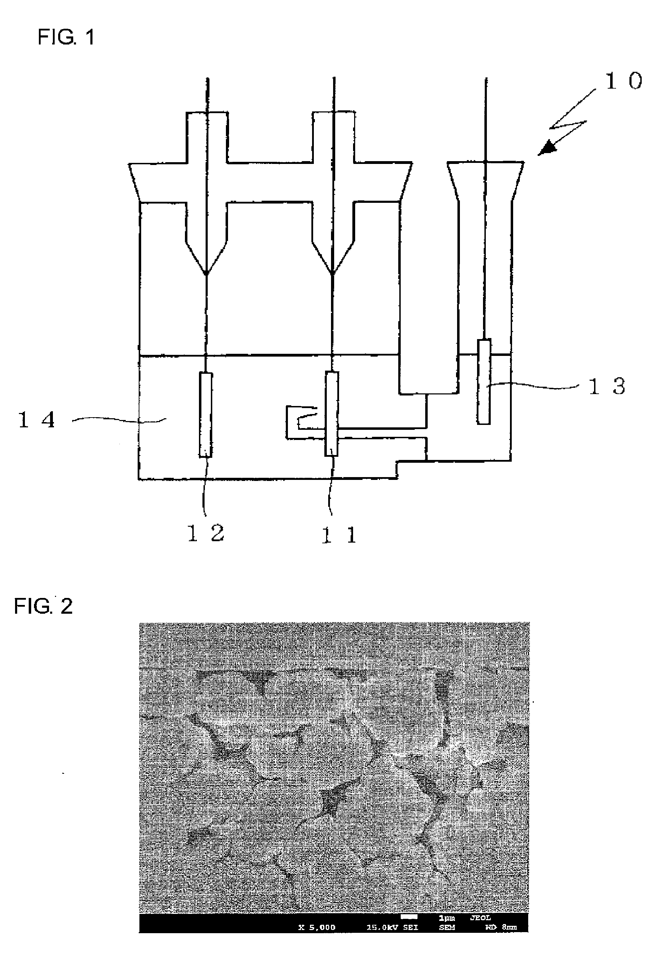

Thereafter, aqueous sodium hydroxide was added dropwise to the aqueous solution so that the resulting aqueous solution had a pH of 9 to 12, whereby a precipitate was produced. Then, the produced precipitate was filtered and rinsed in water. Next, the precipitate was subjected to heat treatment in a stream of oxygen-containing gas to obtain a nickel-cobalt-manganese composite oxide ((Ni_{0.4}Co_{0.2}Mn₀.₄)₃O₄). Mixed with the obtained composite oxide was lithium carbonate to give a molar ratio of 1.15 relative to the total amount of substance of nickel, cobalt, and manganese, followed by firing at 980°C for 15 hours. Next, the fired product was ground and classified to obtain a first particulate lithium-containing transition metal oxide. The composition of the obtained first particulate lithium-containing transition metal oxide was Li_{1.15}Ni_{0.4}Co_{0.2}Mn_{0.4}O₂. The first particulate lithium-containing transition metal oxide had an average particle size of 6.9 µm, a specific surface area of 0.5 m²/g, and a voidage of 3%. Fig. 2 shows a scanning electron micrograph of a cross section of the first particulate lithium-containing transition metal oxide used for the calculation of the voidage.

(Production of Second Particulate Lithium-Containing Transition Metal Oxide)

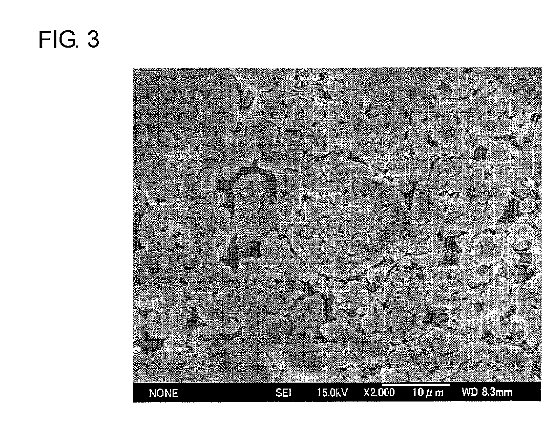

In this example, a second particulate lithium-containing transition metal oxide was produced using spray drying. Specifically, lithium carbonate, nickel hydroxide, cobalt oxyhydroxide, and manganese oxide were weighed and mixed so that the molar ratio among nickel, cobalt, and manganese (the nickel to cobalt to manganese ratio) was 40:20:40. Thereafter, pure water was added to the mixture to prepare a slurry. The slurry was sprayed and dried. Then, the obtained particulate powder was fired in the air atmosphere at 1000°C for 2 hours and then classified to obtain a second particulate lithium-containing transition metal oxide. The composition of the obtained second particulate lithium-containing transition metal oxide was Li_{1.15}Ni_{0.4}Co_{0.2}Mn_{0.4}O₂. The second particulate lithium-containing transition metal oxide had an average particle size of 11.3 µm, a specific surface area of 1.1 m²/g, and a voidage of 39%. Fig. 3 shows a scanning electron micrograph of a cross section of the second particulate lithium-containing transition metal oxide used for the calculation of the voidage.

### (Production of Positive Electrode)

First, the first and second particulate lithium-containing transition metal oxides produced in the above manner were mixed so that the mass ratio between them (the first particulate lithium-containing transition metal oxide to second particulate lithium-containing transition metal oxide ratio) was 25:75, whereby a positive-electrode active material was obtained. The positive-electrode active material thus obtained, vapour grown carbon fibers (VGCF) as an electronic conductor, and an N-methyl-2-pyrrolidone solution containing poly(vinylidene fluoride) dissolved as a binder therein were formulated so that the mass ratio among the positive-electrode active material, the electronic conductor, and the binder (the positive-electrode active material to electronic conductor to binder ratio) was 92:5:3. Thus, a positive electrode mixture slurry was prepared. The positive electrode mixture slurry was coated on a positive electrode current collector made of a piece of aluminium foil, dried and then rolled with a rolling roll. Finally, a collecting tub made of aluminium was attached to the current collector to complete a positive electrode.

### (Production of Three-Electrode Test Cell)

Next, a three-electrode test cell 10 was produced in which a working electrode 11 formed of the positive electrode produced in the above manner, a counter electrode (negative electrode) 12 made of metal lithium, and a reference electrode 13 made of metal lithium were immersed in a nonaqueous electrolytic solution 14. The nonaqueous electrolytic solution 14 used was a solution in which LiPF₆ was dissolved in a mixture solvent containing ethylene carbonate, methyl ethyl carbonate, and dimethyl carbonate in a volume ratio of 3:3:4 in a concentration of 1 mol/L and vinylene carbonate was also dissolved in the mixture solvent to give a concentration of 1% by mass.

### Example 2

A three-electrode test cell 10 was produced in the same manner as in Example 1, except that the mass ratio between the first and second particulate lithium-containing transition metal oxides (first particulate lithium-containing transition metal oxide to second particulate lithium-containing transition metal oxide ratio) was 50:50.

### Example 3

A three-electrode test cell 10 was produced in the same manner as in Example 1, except that the mass ratio between the first and second particulate lithium-containing transition metal oxides (first particulate lithium-containing transition metal oxide to second particulate lithium-containing transition metal oxide ratio) was 75:25.

### Comparative Example 1

A three-electrode test cell 10 was produced in the same manner as in Example 1, except that only the second particulate lithium-containing transition metal oxide was used as a positive-electrode active material, and the first particulate lithium-containing transition metal oxide was not used.

### Comparative Example 2

A three-electrode test cell 10 was produced in the same manner as in Example 1, except that only the first particulate lithium-containing transition metal oxide was used as a positive-electrode active material, and the second particulate lithium-containing transition metal oxide was not used.

### (Evaluation of Power Output Characteristic)

Each three-electrode test cell 10 produced in Examples 1 to 3 and Comparative Examples 1 and 2 was charged at a constant current with a current density of 0.2 mA/cm² to 4.3 V (vs. Li/Li⁺) at 25°C and then charged at a constant voltage of 4.3 V (vs. Li/Li⁺) to a current density of 0.04 mA/cm². Thereafter, the test cell was discharged at a constant current with a current density of 0.2 mA/cm² to 2.5 V (vs. Li/Li⁺). The discharge capacity of the test cell at this point was measured as a rating capacity of the nonaqueous electrolyte secondary battery.

Next, each three-electrode test cell 10 produced in Examples 1 to 3 and Comparative Examples 1 and 2 was charged to 50% of the rating capacity, i.e., until its state of charge (SOC) reached 50%. In this condition, the power output of the test cell upon discharge at 25°C was measured. The results are shown in TABLE 1 below. Note that "Output" indicated in TABLE 1 refers to a value relative to the power output of Comparative Example 1 being assumed to be 100%.

Furthermore, the packing density of each of the powdered positive-electrode active materials in Examples 1 to 3 and Comparative Examples 1 and 2 was determined using a specific 18.5 mm-diameter cylindrical measuring container equipped with a piston-like member. In order to determine the packing density, the initial height of the piston-like member in the measuring container was first measured with an indicator. Then, 3 g of the positive-electrode active material was poured into the measuring container and compressed to 59 kN through the piston-like member by a hydraulic pressing device. The height of the piston-like member at this point was measured with the indicator to determine the packing density. The results are shown in TABLE 1 below. Note that "Packing Density" indicated in TABLE 1 refers to a value relative to the packing density of Comparative Example 1 being assumed to be 100%.

**TABLE 1**

| | First Particulate Lithium-Containing Transition Metal Oxide (Voidage: 3%) | Second Particulate Lithium-Containing Transition Metal Oxide (Voidage: 39%) | Packing Density | Output | Output per Unit Volume |
|---|---|---|---|---|---|
| | (% by mass) | (% by mass) | (%) | (%) | (%) |
| Comp.Ex.1 | 0 | 100 | 100 | 100 | 100 |
| Ex.1 | 25 | 75 | 106 | 106 | 112 |
| Ex. 2 | 50 | 50 | 109 | 107 | 117 |
| Ex. 3 | 75 | 25 | 111 | 104 | 115 |
| Comp.Ex. 2 | 100 | 0 | 108 | 99 | 107 |

The results shown in TABLE 1 reveal that Examples 1 to 3 using two different kinds of particulate lithium-containing transition metal oxides of different voidages as a positive-electrode active material provide higher power outputs than Comparative Examples 1 and 2 using a single kind of particulate lithium-containing transition metal oxide as a positive-electrode active material. Among Examples 1 to 3, Examples 2 and 3, whose first particulate lithium-containing transition metal oxide to first particulate lithium-containing transition metal oxide plus second particulate lithium-containing transition metal oxide ratio was 50% by mass or more, provided particularly high power outputs. It can be understood from this result that the first particulate lithium-containing transition metal oxide to first particulate lithium-containing transition metal oxide plus second particulate lithium-containing transition metal oxide ratio is preferably 50% or more.

## Claims

1. An electrode for a nonaqueous electrolyte secondary battery, comprising a current collector and an active material layer formed on the current collector and containing an active material, wherein
the active material contains first and second particulate lithium-containing transition metal oxides of different voidages.

2. The electrode for the nonaqueous electrolyte secondary battery according to claim 1, wherein the voidage of the first particulate lithium-containing transition metal oxide is at least 20% smaller than that of the second particulate lithium-containing transition metal oxide.

3. The electrode for the nonaqueous electrolyte secondary battery according to claim 1 or 2, wherein the voidage of the first particulate lithium-containing transition metal oxide is 10% or less.

4. The electrode for the nonaqueous electrolyte secondary battery according to any one of claims 1 to 3, wherein the content of the first particulate lithium-containing transition metal oxide in the total amount of the first and second particulate lithium-containing transition metal oxides (the first particulate lithium-containing transition metal oxide to first particulate lithium-containing transition metal oxide plus second particulate lithium-containing transition metal oxide ratio) is 50% by mass or more.

5. The electrode for the nonaqueous electrolyte secondary battery according to any one of claims 1 to 4, wherein the first and second particulate lithium-containing transition metal oxides are of the same kind of lithium-containing transition metal oxide.

6. The electrode for the nonaqueous electrolyte secondary battery according to any one of claims 1 to 4, wherein each of the first and second particulate lithium-containing transition metal oxides has a layered structure and contains at least one of nickel, cobalt, and manganese.

7. The electrode for the nonaqueous electrolyte secondary battery according to claim 6, wherein each of the first and second particulate lithium-containing transition metal oxides has a layered structure and contains all of nickel, cobalt, and manganese.

8. A nonaqueous electrolyte secondary battery comprising the electrode for the nonaqueous electrolyte secondary battery according to any one of claims 1 to 7.
